# EUROPEAN PATENT APPLICATION

(11) **EP 1 770 916 A1**
(43) Date of publication of application: **04.04.2007**
(21) Application number: 05021502.9
(22) Date of filing: 30.09.2005
(51) Int. Cl.: H04L 12/56

(54) **Bandwidth optimisation in a mobile communications system**

(71) Applicant: SIEMENS AKTIENGESELLSCHAFT, 80333 München (DE)
(72) Inventor: Abramovich, Israel, 44813, Oranit (IL); Hazay, Alon, 62917, Tel Aviv (IL)

(57) **Abstract**

The invention consists of an apparatus and a method for transmitting data between at least two devices (15) of a communications system, communicating over at least one connection comprising the steps of:
- receiving said data over a first interface (151) of a first device (15) of said at least two devices (15);
- verifying that said data belongs to at least one active session present on said first interface;
- optimising, upon said verification being completed, said data by removing a redundant part of said data; and
- transmitting, upon said optimisation being completed, over a second interface (152) of said first device (15) said data to a second device (15) of said at least two devices (15).

## Description

### Field of the invention

The invention is used in mobile communications system to ensure bandwidth optimisation of radio access interfaces.

### Summary of the invention

In today's mobile communications systems a variety of different systems are in use. The most common being 2G (Second Generation Mobile Networks) and 3G (Third Generation Mobile Networks). These systems use a variety of technologies, for example GSM (Global System for Mobile Communication) for 2G or UMTS (Universal Mobile Telecommunications System) for 3G.

A major drawback of the presence of these different types of systems and technologies is that network operators need to install and maintain distinct and separate systems within their respective networks, in order to allow mobile users supporting different technologies, to gain access to the network. This access being gained over the radio link between the mobile users and the operator's network.

To overcome this, network operators have invested in systems that allow for the convergence of the different technologies, i.e. reducing the amount of infrastructure required by constructing systems that can handle at the same time mobile users that support different technologies. In this way, network operators infrastructure costs incurred are reduced and convergence of the different technologies is effected.

However, in order to provide this convergence, the focus for the system design has been to be able to deliver mobile sessions from the same system to 2G and 3G mobile equipment. As a consequence, the bandwidth present and available to the network operators is inefficiently used. This leads to increase operating costs for the network operators.

The bandwidth is not fully optimised due to the fact that the lines used do not usually use all the channels available for sending data. Furthermore, when mobile sessions are active, for example a voice session, there are a lot of periods when no valid information is present due to silences; nevertheless the same bandwidth is consumed, which is wasteful and costly.

NMS Communications © (http://www.nmscommunications.com/) and Celtro © (http://www.celtro.com/) have both addressed this issue through their corresponding products, "Access Gate" and "DynaMate".

In the proposed solutions, a BTS (base transreceiver station) is modified and an additional TDM (Time Division Multiplexing) device is incorporated into the BTS. This device, in the BTS, performs bandwidth optimisation and then the data is transmitted to a BSC (Base Station Controller).

However, this "on site" optimisation does not offer enough flexibility to a network operator, as it is limited by the actual size of the BTS.

A need therefore exists for a technique that can optimise the available bandwidth and ensure that it is managed efficiently, avoids wasting bandwidth and increases the flexibility afforded to a network operator without having to modify existing devices as well as reducing the required processing power. Furthermore a need exists to reduce the delay taken when preparing the data for transmission.

With the present invention the above mentioned problems are resolved. The proposed technique

The technique is achieved by the teachings contained in the independent method and apparatus claims, wherein:
Said method for transmitting data between at least two devices of a communications system, communicating over at least one connection comprises the steps of:
   - receiving said data over a first interface of a first device of said at least two devices;
   - verifying that said data belongs to at least one active session present on said first interface;
   - optimising, upon said verification being completed, said data by removing a redundant part of said data; and
   - transmitting, upon said optimisation being completed, over a second interface of said first device said data to a second device of said at least two devices.

Said apparatus comprises means arranged to execute all the steps of the method claim 1.

Further advantages can be seen in the dependent claims, wherein: a first and a second transmission protocol is used respectively on a first and second interface. Upon transfer of data from the first to the second interface, the data transferred is encapsulated into a transport unit of the second transmission protocol having a reduced overhead size. The encapsulation takes place on an ATM Adaptation Layer 2 layer of the second transmission protocol. The overhead size is reduced by reducing the header size of the transport unit. The first and second transmission protocols use a frame and a cell format respectively for transporting data. Active sessions are detected as being present by detecting a repeating fixed pattern in the data that is being received and the fixed pattern is a frame synchronisation pattern. All active sessions detected have their data content verified by verifying control bits of each received frame of data.

Optimisation is carried out on a frame by frame basis and depending on the type of received frame a redundant part of the data received is removed.

### Short description of the drawings

The present invention will become more fully understood from the detailed description given hereinbelow and the accompanying drawings which are given by way of illustration only, and thus are not limitative of the present invention, and wherein:
Fig. 1 depicts a 2G type system where the invention is applicable.
Fig. 2a and 2b depict how the invention works within a 2G type system.
Fig. 3.1, 3.2 depict the comparison of the proposed new AAL2 packet format according to the invention and the standard AAL2 packet format.
Fig. 4 depicts the proposed apparatus wherein the proposed invention is implemented.
Fig. 5 depicts a flow chart diagram of the proposed invention.

### Detailed description of the invention

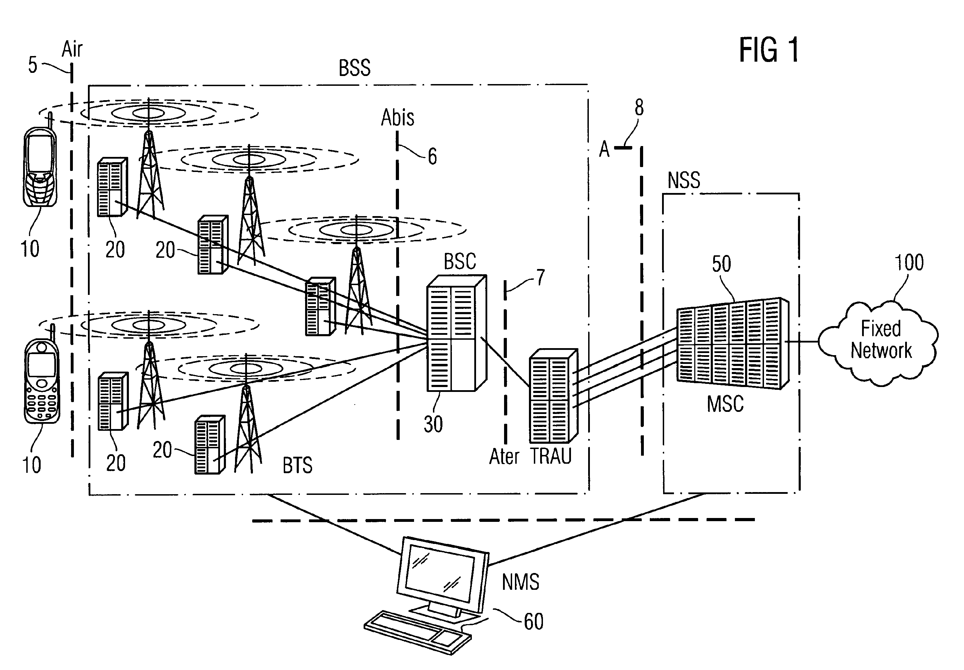

Fig. 1 shows a 2G system, for example a GSM system, currently used by network operators. It is divided into three parts: BSS (base station subsystem), NSS (network subsystem) and NMS (network management subsystem).

The BSS in turn, consists of the BTS (base transreceiver station) 20, BSC (base station controller) 30 and TRAU (transcoder/rate adapter unit) 40.

The NSS acts as an interface between the 2G network, for example the GSM network and the fixed network 100. The fixed network 100 can be for example a PSTN/ISDN (Public Switched Telephone Network/Integrated Services Digital Network) network. The main components that comprise the NSS are the MSC (Mobile Switching Centre) 50, HLR (Home Location Register), VLR (Visitor Location Register), AUC (Authentication Centre) and EIR (Equipment Identity Registers). For reasons of simplicity the HLR, VLR, AUC and EIR are not depicted in fig. 1.

The NMS ensures that the running of the system comprising the BSS and NSS is smooth. It performs network monitoring, network development, network measurements and fault measurements. It also collects data and performs performance analysis. The NMS can be either a dedicated device 60, such as a computer or a separate subsystem.

The BSS acts as the radio access subsystem, enabling a plurality of devices 10 to gain access to the fixed network 100 over the air interface 5.

Within the BSS, there exist further interfaces: between the BTS 20 and BSC 30 namely the Abis 6, between the BSC 30 and TRAU 40 namely the Ater 7 and between the BSS and the MSC 50, namely the A interface 8.

Interface 6, runs over TDM (Time Division Multiplex) lines, otherwise known as E1/T1 lines. Data is carried over these lines at a rate of 2.048 million bits per second and 32 channels of 64kbps (kilo bits per second) can be accommodated. The data carried, is multiplexed together and fitted into 64kbit (kilo bit) slots within the channels.

Mobile sessions on the Abis/Ater interface, that is on the BSC 30, run in a 16kbit or 8kbit channel that is sub-multiplexed into a time slot. Each mobile session delivers data with the aid of fixed sized frames. The data delivered by the frames consists of both user data from the devices 10 as well as signalling information used by the subsystem for the purposes of control and connectivity.

Interface 8, is present between the TRAU 40 and the MSC 50. Data over this interface is transmitted uncompressed and SS7 (Signalling System no. 7) protocol is used for any signalling on all NSS interfaces. Other signalling protocols used in the BSS are the LAPDm (modified Link Access Protocol for D-channel) used for the air interface 5 and X.25 used between the BSS and NMS.

The MSC 50 is responsible for the switching functions that are necessary for interconnections between users that have the devices 10 and other users both mobile and fixed. For this reason it makes use of the HLR, VLR and AUC.

The HLR contains information related to each mobile subscriber using a device 10, such as type of subscription, services allowed, the subscriber's current location and the status of the subscriber's device 10. The VLR contains information related to subscribers that enter into the coverage region under the control of the MSC. The VLR, unlike the HLR which comprises of a static database containing the subscriber information, comprises of a dynamic database. Once a subscriber's device 10 has moved out of a coverage region, the VLR of that coverage region will remove all the entries from its database and move them to the VLR of the new coverage region. The AUC is responsible for policing actions in the network, and comprises of data required to protect the network against false subscribers and to protect the calls of regular subscribers. The EIR contains the necessary information relating to each item of mobile equipment indicating that the equipment, such as devices 10 conform for example to the 2G standards.

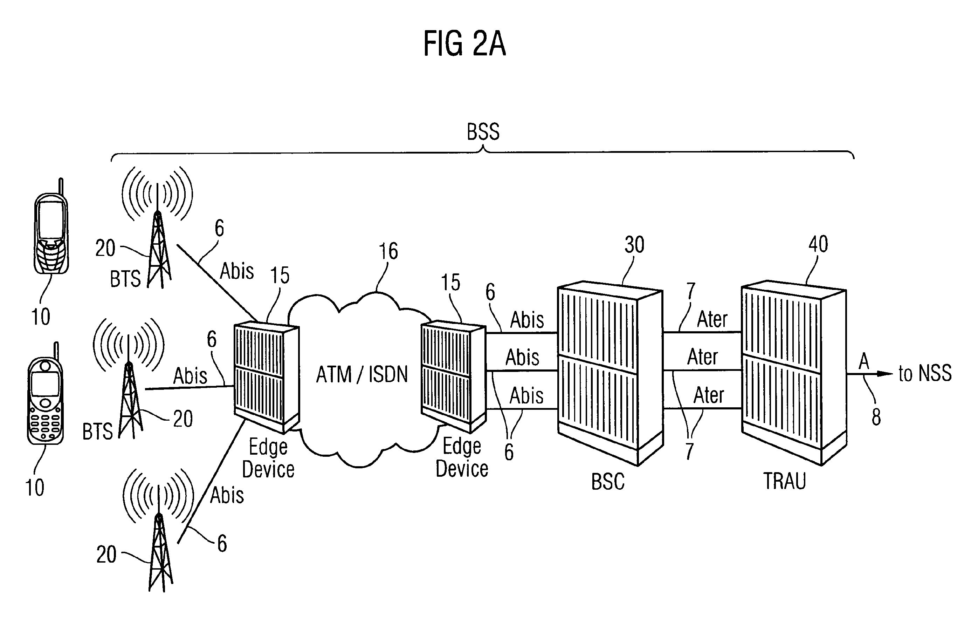

Fig. 2a depicts an example of the proposed invention when applied to a 2G network. The proposed invention can also be applied to a 3G network that uses UMTS for example, where the interface 6 is namely the Iub interface.

The Iub interface connects a base station, or also known as a node B in a 3G network, to a RNC (Radio Network Controller) acting in turn as an interface between the base station and a core network. For reasons of simplicity a 3G network is not depicted, however a person skilled in the art can easily apply the proposed invention to a 3G network configuration.

As it can be seen, the BSS part comprises of a number of BTSs 20 that each cover a certain coverage area, which is also known as a cell, in order to allow devices 10 to connect to the network. These in turn are coupled over an Abis interface 6 to an apparatus 15, which is termed an edge device. The apparatus 15 is connected via an ATM/ISDN (Asynchronous Transfer Mode/Integrated Services Digital Network) connection 16 to another such apparatus 15, which in turn is coupled to the BSC 30 over a further Abis interface 6. The BSC 30 is further coupled to the TRAU 40 over an Ater interface 7, which in turn is coupled over an A interface 8 to the NSS part of the 2G network which is not shown for reasons of simplicity.

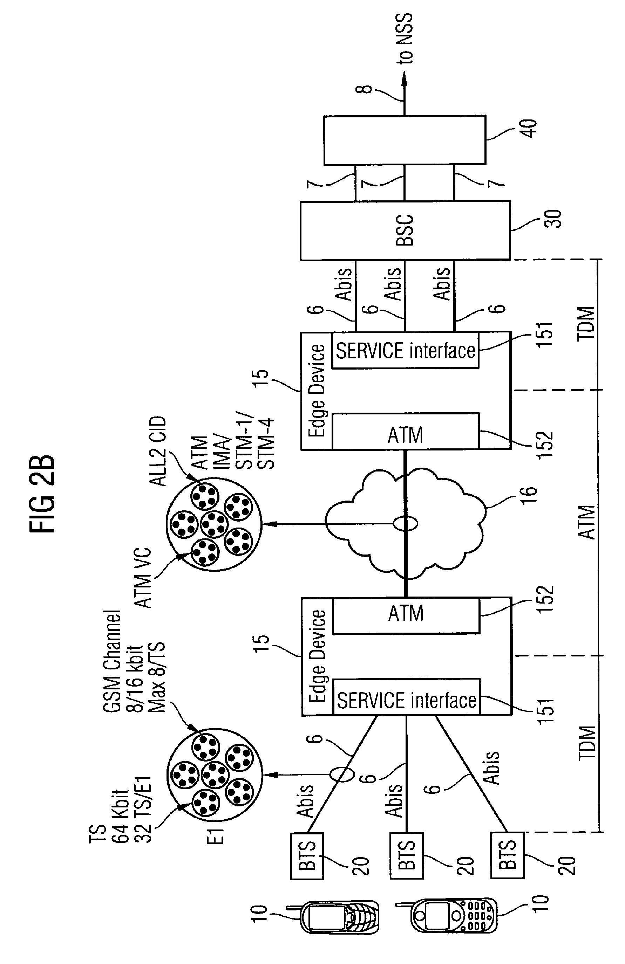

Fig. 2b depicts a more detailed view of fig. 2a. The Abis interface 6 that normally directly couples the BTSs 20 to the BSC 30 over an E1 line is divided into two independent sections, through the insertion of at least two apparatuses 15 which are coupled together over at least one ATM/ISDN connection 16. Depending on the coupling of the two apparatuses 15, connection 16 can be a direct physical connection between the two apparatuses 15 or it can be a logical connection between the two. The E1 lines have 64kbit time slots (TSs) and the mobile sessions that run over them, run over an 8kbit or 16 kbit channel that is sub-multiplexed into one TS.

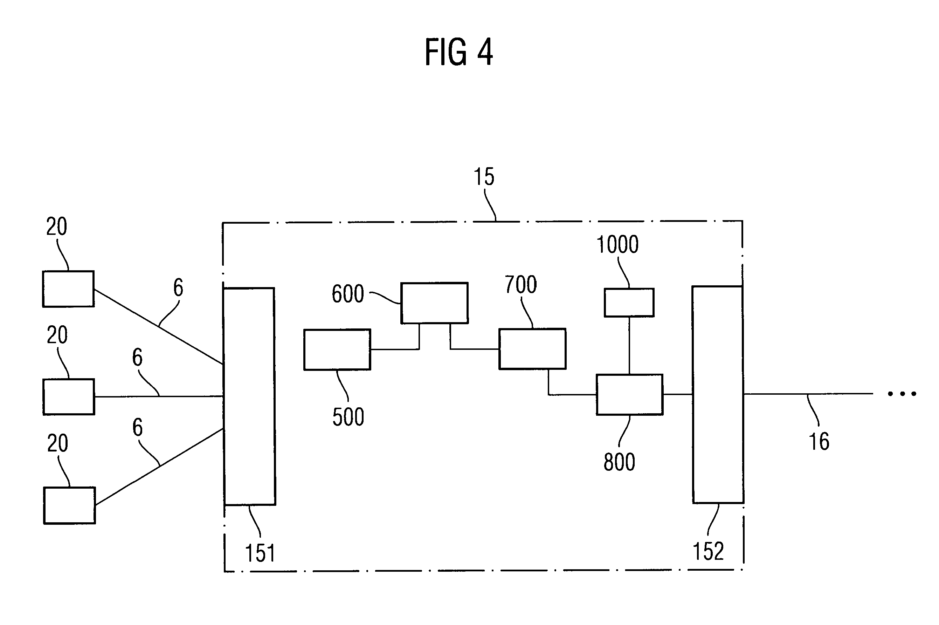

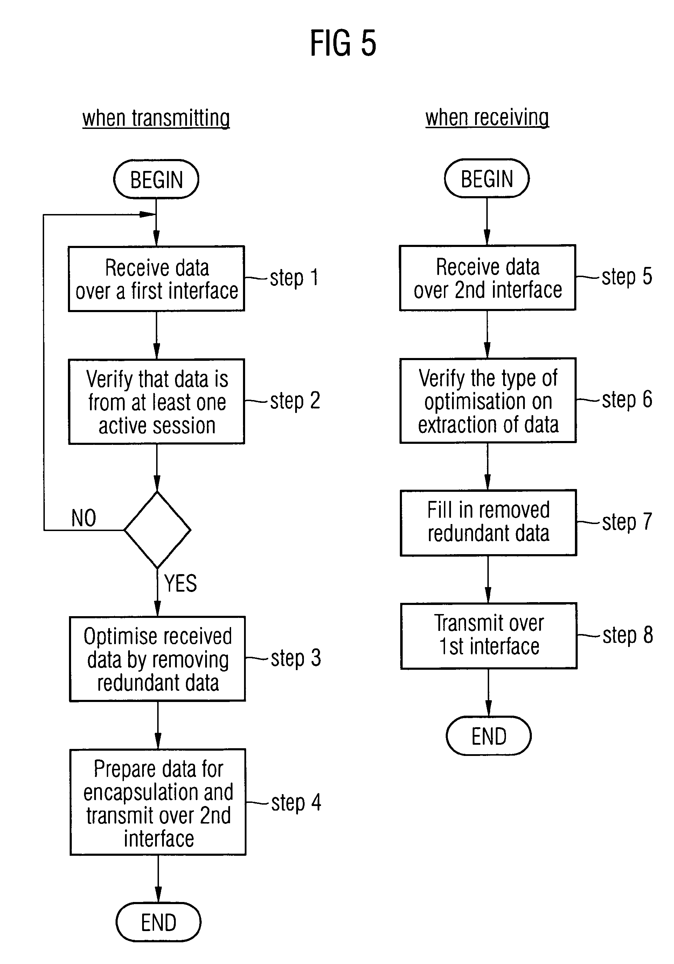

Apparatus 15, as depicted in figures. 4 and 5, receives data in a frame format from the different mobile sessions, via receiving/transmitting means 500, from several BTSs 20, over a first interface 151, which is adapted to receive/transmit data over a first protocol and aggregates all the data received.

The apparatus 15 then executes a verification process via verifying means 600, to verify that the data received on the first interface 151 belongs to at least one active session present on the interface 151. An active session is present when the verification process finds a repeating frame synchronmisation pattern in a channel. The synchronisation pattern is a fixed pattern than delineates each frame.

The verification process is automatic and active on a permanent basis on interface 151 for each one of the received 8kbit or 16kbit channels, and the verifying means 600 are arranged to check each received frame.

Once the verification has been completed, then the data received is optimised, by removing redundant parts of the data. Optimisation means 700 are arranged to check the contents of each frame by checking the control bits of each frame. Upon checking the control bits and finding redundant data, the optimisation means 700 are further arranged to perform hardware removal of the redundant data.

Contrary to normal GSM mobile sessions, wherein the mobile sessions are allocated on the Abis interfaces 6, using signalling protocols which consume time and processing power, by removing redundant data using hardware means (optimisation means 700), a large number of Abis interfaces 6 can be processed simultaneously, without having to consume a large amount of processing power or time.

Redundant data, appearing in a bit stream of the received frames, can be at least one of the following: an idle channel pattern, a TRAU frame synchronisation pattern, a GSM channel type encoding such as a repeating silence descriptor encoding.

Upon completion of the optimisation of the data, the size of the data that has to be transmitted by the apparatus 15 to the BSC 30 is reduced.

The transmission is effected by receive/transmitting means 800, which take the optimised data from the first interface 151 and receive/transmit it over a second interface 152. This second interface 152 is an ATM interface and so the receive/transmitting means 800 also perform the necessary encapsulation of the data from a first transmission protocol using frames as a transport unit to a second transmission protocol using cells as a transport unit. The receive/transmitting means 800 are fully adapted to perform encapsulation for a number of different transmission protocols. It must be noted at this point, that channels that don't carry any mobile sessions, for example idle channels, will not be transported over the ATM connection thus saving their bandwidth.

Once the receive/transmitting means 800 have performed the necessary encapsulation of the optimised data, they will then transmit it over a connection 16 which is an ATM connection to a similar apparatus 15, than has similar receive/transmitting means 800 adapted to receive the ATM transport units, extract the optimised data from them and reconstruct the omitted data that was removed originally and pass the data in its original format to the BSC 30 over the Abis interface 6.

The physical lines, over which the connection 16 runs, there can be a plurality of them, are also E1 lines and IMA (Inverse Multiplexing over ATM) is used to break up the highspeed stream of ATM cells that are being transmitted between the two apparatuses 15. On arrival at the destination apparatus 15, the receive/transmitting means 800 then reconstruct the ATM cell order.

The cells are placed in VCs (Virtual Channels) and are multiplex onto the line, using STM-1 (Statistical Multiplexer -1 channel) and STM-4 (Statistical Multiplexer -4 channels). The receive/transmitting means 800 are adapted to perform the necessary multiplexing and demultiplexing.

The type of optimisation performed is predefined according to the type of redundant data that is removed, for example if the redundant data corresponds to idle data or silent data. Therefore all apparatuses 15 that are present in BSSs have this information preconfigured and stored in storage means 1000. Upon receiving a cell on interface 152 and extracting the optimised data, the apparatus 15 will also extract the information about the type of optimisation and so it will know what data was removed due to redundancy and then reproduce it.

As the mobile sessions comprise of voice sessions, these are transported over narrow band channels. The transport is performed using VCs over an AAL2 (ATM Adaptation Layer 2).

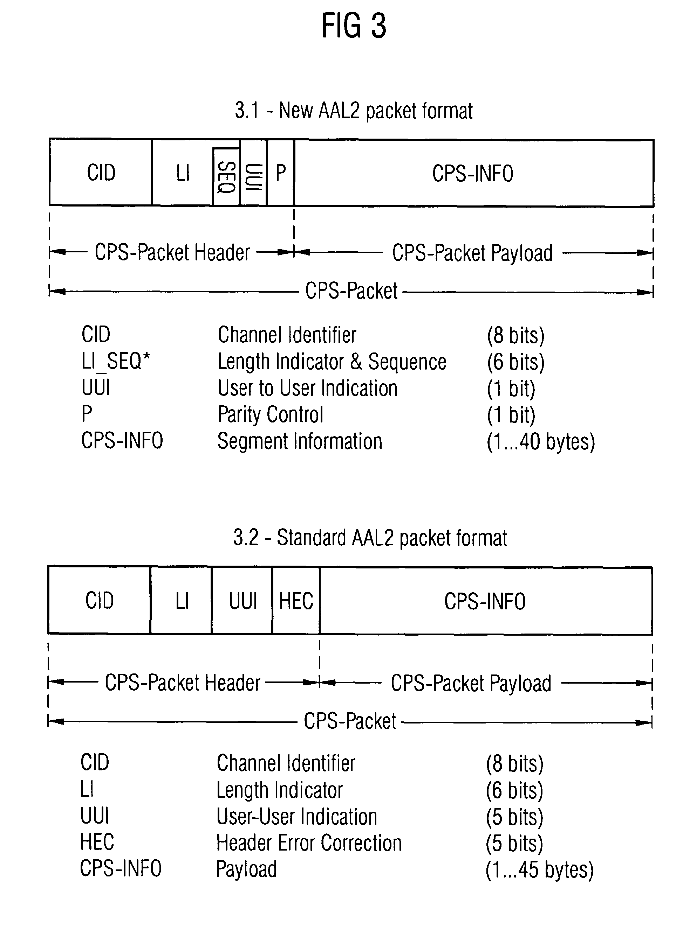

AAL2 provides bandwidth efficient transmission of low rate, short and variable cells in delay sensitive applications. It supports VBR (Variable Bit Rate) and CBR (Constant Bit Rate) transmission rates, as well as providing for variable sized payloads within cells and across cells. AAL2 type of cells are subdivided into the Common Part Sublayer (CPS) and the Service Specific Convergence Sublayer (SSCS). Fig. 3.2 depicts the standard AAL2 CPS packet format, wherein:

### CID

Channel identification. Values may be as follows:
- 0: Not used
- 1: Reserved for layer management peer-to-peer procedures
- 2-7: Reserved
- 8-255: Identifies AAL2 user (248 total channels)

### LI

Length indicator. This is the length of the packet payload associated with each individual user. Value is one less than the packet payload and has a default value of 45 bytes (may be set to 64 bytes).

### UUI

User-to-user indication. Provides a link between the CPS and an appropriate SSCS that satisfies the higher layer application. Values may be:
- 1-15: Encoding format for audio, circuit mode data and demodulated fascimile image data using SSCS type 1 packets.
- 16-22: Reserved.
- 23: Reserved for SSCS type 2 packets.
- 24: SSCS type 3 packets except alarm packets.
- 25: Non-standard extension.
- 26: Framed mode data, final packet.
- 27: Framed mode data, more to come.
- 28-30: Reserved.
- 31: Alarm packets.

### HEC

Header error control.

### Information payload

Contains the CPS/SSCS PDU (Protocol Data Unit).

As it can be seen from fig. 3.2, the standard AAL2 packet uses a 3 byte header to convey the required information, however this is a large overhead compared to the amount of data being transmitted and can increase the delay that the data has to wait while it is accumulated and placed into the ATM cells. The more data to be transmitted the longer the delay prior to transmission as well as the delay at the receiving end where the data has to be received and then put together.

To reduce this delay, the header of the AAL2 packet is reduced to a 2 byte header as can be seen in fig. 3.1 wherein:

The HEC field is completed removed, the error correction function being replaced by the parity control field. The UUI field is reduced and a Sequence field is incorporated into the Length Indicator field but the overall size of the Length Indicator field is not increased.

The AAL2 overhead is reduced by 33% in this way providing a reduction in the delay incurred. By receiving numerous channels on one interface and combining those on the same apparatus 15 onto the same connection 16, statistical multiplexing can be used. This saves bandwidth as the total given bandwidth at a given time is less than the sum of all the inputs on interface 151.

Furthermore, such apparatuses 15 can be used in the same communications network for both 2G and 3G transport for accessing an operator's network, reducing the need to invest in complicated network equipment.

Although the invention has been described in terms of a preferred embodiment described herein, those skilled in the art will appreciate other embodiments and modifications which can be made without departing from the scope of the teachings of the invention. All such modifications are intended to be included within the scope of the claims appended hereto.

## Claims

1. Method for transmitting data between at least two devices (15) of a communications system, communicating over at least one connection comprising the steps of:
- receiving said data over a first interface (151) of a first device (15) of said at least two devices (15);
- verifying that said data belongs to at least one active session present on said first interface;
- optimising, upon said verification being completed, said data by removing a redundant part of said data; and
- transmitting, upon said optimisation being completed, over a second interface (152) of said first device (15) said data to a second device (15) of said at least two devices (15).

2. Method according to claim 1, wherein said first (151) and second interfaces (152) use respectively a first and second transmission protocol.

3. Method according to one of the previous claims 1 or 2, wherein upon transfer of said data to said second interface an encapsulation of said data is performed.

4. Method according to claim 3, wherein said encapsulation reduces a size of an overhead of a transport unit used by said second transmission protocol.

5. Method according to claim 4, wherein said overhead of said transport unit used by said second transmission protocol is reduced by reducing a header size of said transport unit.

6. Method according to one of the previous claims 1 to 5, wherein said data is received in a frame format and transmitted in a cell format.

7. Method according to claim 1, wherein said active session is present by detecting a repeating fixed pattern in said data being received.

8. Method according to claim 7, wherein said repeating fixed pattern is a frame synchronisation pattern.

9. Method according to claim 7, wherein upon said active session being present a content of said data is further verified.

10. Method according to claim 9, wherein said content is verified by verifying a series of control bits of each received frame containing said data.

11. Method according to claim 10, wherein all of said active sessions present are verified.

12. Method according to claim 1, wherein said optimisation is carried out on a frame by frame basis.

13. Method according to claim 12, wherein said redundant part of said data being removed is dependant on a type of received frame.

14. Method according to claim 3, wherein said encapsulation takes place on an ATM Adaptation Layer 2 layer of said second transmission protocol.

15. Apparatus (15) comprising means arranged to execute the method according to claims 1 to 14.

16. Communications network comprising at least two apparatuses (15) according to claim 15.
